# EUROPEAN PATENT APPLICATION

(11) **EP 4 618 597 A1**
(43) Date of publication of application: **17.09.2025**
(21) Application number: 25162069.6
(22) Date of filing: 06.03.2025
(51) Int. Cl.: H04W 4/021, H04W 12/088, H04W 12/63, H04W 36/34, H04W 48/04

(54) **FIXED WIRELESS ACCESS MOBILITY**

(30) Priority: 12.03.2024 US 202418603140
(71) Applicant: Nokia Solutions and Networks Oy, 02610 Espoo (FI)
(72) Inventor: DION, Gino, Kingston (CA); STEVENSON, Brad, Southfield (CA)
(74) Representative: Bryers Intellectual Property Ltd

(57) **Abstract**

Various example embodiments of a fixed wireless access (FWA) mobility capability are presented herein. The FWA mobility capability may be based on configuration of a customer premises equipment (CPE) device of an FWA service to support enforcement of mobility of the CPE device with respect to the FWA service. The CPE device may be configured to support enforcement of FWA mobility for the CPE device with respect to the FWA service by controlling operation of the CPE device based on a location of CPE device with respect to an approved operating region of the CPE device for the FWA service (e.g., checking the location of the CPE device with respect to the approved operating region in response to an event and, based on a determination that the CPE device is located outside of the approved operating region, activating a captive portal on the CPE device).

## Description

### TECHNICAL FIELD

Various example embodiments relate generally to communication systems and, more particularly but not exclusively, to supporting fixed wireless access service mobility in wireless communication systems.

### BACKGROUND

Various communications technologies may be used to support communications in various types of communication systems.

### SUMMARY

In at least some example embodiments, an apparatus includes at least one processor and at least one memory storing instructions which, when executed by the at least one processor, cause the apparatus at least to detect, by a device configured to communicate based on a fixed wireless access service, an event, perform, by the device in response to the event, a determination as to whether a current location of the device is within an approved region for the device for the fixed wireless access service, and perform, by the device based on a determination that the current location of the device is outside of the approved region for the device for the fixed wireless access service, activation of a captive portal configured to control communications of the device using the fixed wireless access service and initiation of a service access process configured to support use of the fixed wireless access service by the device outside of the approved region for the device for the fixed wireless access service. In at least some example embodiments, the event is a reboot of the device, a reset of the device, or a mobility event related to mobility of the device. In at least some example embodiments, the event is an association of the device with a new base station, an association of the device with a new cell of a base station, or a physical movement of the device to a new geographic location. In at least some example embodiments, the determination as to whether the current location of the device is within the approved region for the device for the fixed wireless access service is based on approved region information configured to describe the approved region for the device for the fixed wireless access service. In at least some example embodiments, the approved region information includes at least one of an indication of one or more base stations approved for the device, an indication of one or more cells approved for the device, one or more global positioning system coordinates for one or more locations approved for the device, or an indication of a class of service for the device. In at least some example embodiments, at least one of a portion of the approved region information is preconfigured on the device or a portion of the approved region information is received by the device from a service provider device associated with the fixed wireless access service. In at least some example embodiments, at least a portion of the approved region information is received at the device without a corresponding firmware update for the device. In at least some example embodiments, the captive portal is configured to intercept and redirect web-based traffic and block other internet traffic. In at least some example embodiments, the service activation process is configured to initiate presentation of a notification that the fixed wireless access service is suspended based on a determination that the device has moved outside of the approved region for the device for the fixed wireless access service. In at least some example embodiments, the service activation process is configured to initiate presentation of an option for a customer of the fixed wireless access service to request use of the fixed wireless access service by the device at the current location of the device. In at least some example embodiments, the instructions, when executed by the at least one processor, cause the apparatus at least to send, toward a network configured to provide the fixed wireless access service, a query to determine whether the network has sufficient capacity to support operation of the device at the current location of the device and initiate, based on a response indicative that the network has sufficient capacity to support operation of the device at the current location of the device, presentation of the option for the customer of the fixed wireless access service to request use of the fixed wireless access service by the device at the current location of the device. In at least some example embodiments, the option for the customer of the fixed wireless access service to request use of the fixed wireless access service by the device at the current location of the device includes an option for the customer of the fixed wireless access service to request a change of the approved region for the device for the fixed wireless access service to include the current location of the device. In at least some example embodiments, the instructions, when executed by the at least one processor, cause the apparatus at least to receive, from a service provider of the fixed wireless access service, a confirmation that the approved region for the device for the fixed wireless access service has been changed to include the current location of the device and deactivate, based on the confirmation that the approved region for the device for the fixed wireless access service has been changed to include the current location of the device, the captive portal. In at least some example embodiments, the option for the customer of the fixed wireless access service to request use of the fixed wireless access service by the device at the current location of the device includes an option for the customer of the fixed wireless access service to purchase a roaming plan that permits use of the device at the current location of the device. In at least some example embodiments, the instructions, when executed by the at least one processor, cause the apparatus at least to receive, from a service provider of the fixed wireless access service, a confirmation that the customer of the fixed wireless access service has purchased the roaming plan that permits use of the device at the current location of the device and deactivate, based on the confirmation that the customer of the fixed wireless access service has purchased the roaming plan that permits use of the device at the current location of the device, the captive portal. In at least some example embodiments, the instructions, when executed by the at least one processor, cause the apparatus at least to reactivate, based on a determination that the device is still located outside of the approved region for the device for the fixed wireless access service at the expiration of the roaming plan, the captive portal. In at least some example embodiments, the apparatus further includes a containerized application configured to detect the event and perform the activation of the captive portal and the initiation of the service access process. In at least some example embodiments, the apparatus further includes a set of firmware configured to cause the apparatus to perform a set of functions, wherein the containerized application is maintained separate from the set of firmware. In at least some example embodiments, the fixed wireless access service is supported by a cellular network.

In at least some example embodiments, a non-transitory computer readable medium stores computer program code which, when executed by an apparatus, cause the apparatus at least to detect, by a device configured to communicate based on a fixed wireless access service, an event, perform, by the device in response to the event, a determination as to whether a current location of the device is within an approved region for the device for the fixed wireless access service, and perform, by the device based on a determination that the current location of the device is outside of the approved region for the device for the fixed wireless access service, activation of a captive portal configured to control communications of the device using the fixed wireless access service and initiation of a service access process configured to support use of the fixed wireless access service by the device outside of the approved region for the device for the fixed wireless access service. In at least some example embodiments, the event is a reboot of the device, a reset of the device, or a mobility event related to mobility of the device. In at least some example embodiments, the event is an association of the device with a new base station, an association of the device with a new cell of a base station, or a physical movement of the device to a new geographic location. In at least some example embodiments, the determination as to whether the current location of the device is within the approved region for the device for the fixed wireless access service is based on approved region information configured to describe the approved region for the device for the fixed wireless access service. In at least some example embodiments, the approved region information includes at least one of an indication of one or more base stations approved for the device, an indication of one or more cells approved for the device, one or more global positioning system coordinates for one or more locations approved for the device, or an indication of a class of service for the device. In at least some example embodiments, at least one of a portion of the approved region information is preconfigured on the device or a portion of the approved region information is received by the device from a service provider device associated with the fixed wireless access service. In at least some example embodiments, at least a portion of the approved region information is received at the device without a corresponding firmware update for the device. In at least some example embodiments, the captive portal is configured to intercept and redirect web-based traffic and block other internet traffic. In at least some example embodiments, the service activation process is configured to initiate presentation of a notification that the fixed wireless access service is suspended based on a determination that the device has moved outside of the approved region for the device for the fixed wireless access service. In at least some example embodiments, the service activation process is configured to initiate presentation of an option for a customer of the fixed wireless access service to request use of the fixed wireless access service by the device at the current location of the device. In at least some example embodiments, the computer program code, when executed by the apparatus, causes the apparatus at least to send, toward a network configured to provide the fixed wireless access service, a query to determine whether the network has sufficient capacity to support operation of the device at the current location of the device and initiate, based on a response indicative that the network has sufficient capacity to support operation of the device at the current location of the device, presentation of the option for the customer of the fixed wireless access service to request use of the fixed wireless access service by the device at the current location of the device. In at least some example embodiments, the option for the customer of the fixed wireless access service to request use of the fixed wireless access service by the device at the current location of the device includes an option for the customer of the fixed wireless access service to request a change of the approved region for the device for the fixed wireless access service to include the current location of the device. In at least some example embodiments, the computer program code, when executed by the apparatus, causes the apparatus at least to receive, from a service provider of the fixed wireless access service, a confirmation that the approved region for the device for the fixed wireless access service has been changed to include the current location of the device and deactivate, based on the confirmation that the approved region for the device for the fixed wireless access service has been changed to include the current location of the device, the captive portal. In at least some example embodiments, the option for the customer of the fixed wireless access service to request use of the fixed wireless access service by the device at the current location of the device includes an option for the customer of the fixed wireless access service to purchase a roaming plan that permits use of the device at the current location of the device. In at least some example embodiments, the computer program code, when executed by the apparatus, causes the apparatus at least to receive, from a service provider of the fixed wireless access service, a confirmation that the customer of the fixed wireless access service has purchased the roaming plan that permits use of the device at the current location of the device and deactivate, based on the confirmation that the customer of the fixed wireless access service has purchased the roaming plan that permits use of the device at the current location of the device, the captive portal. In at least some example embodiments, the computer program code, when executed by the apparatus, causes the apparatus at least to reactivate, based on a determination that the device is still located outside of the approved region for the device for the fixed wireless access service at the expiration of the roaming plan, the captive portal. In at least some example embodiments, the device includes a containerized application configured to detect the event and perform the activation of the captive portal and the initiation of the service access process. In at least some example embodiments, the device includes a set of firmware configured to cause the device to perform a set of functions, wherein the containerized application is maintained separate from the set of firmware. In at least some example embodiments, the fixed wireless access service is supported by a cellular network.

In at least some example embodiments, a method includes detecting, by a device configured to communicate based on a fixed wireless access service, an event, performing, by the device in response to the event, a determination as to whether a current location of the device is within an approved region for the device for the fixed wireless access service, and performing, by the device based on a determination that the current location of the device is outside of the approved region for the device for the fixed wireless access service, activation of a captive portal configured to control communications of the device using the fixed wireless access service and initiation of a service access process configured to support use of the fixed wireless access service by the device outside of the approved region for the device for the fixed wireless access service. In at least some example embodiments, the event is a reboot of the device, a reset of the device, or a mobility event related to mobility of the device. In at least some example embodiments, the event is an association of the device with a new base station, an association of the device with a new cell of a base station, or a physical movement of the device to a new geographic location. In at least some example embodiments, the determination as to whether the current location of the device is within the approved region for the device for the fixed wireless access service is based on approved region information configured to describe the approved region for the device for the fixed wireless access service. In at least some example embodiments, the approved region information includes at least one of an indication of one or more base stations approved for the device, an indication of one or more cells approved for the device, one or more global positioning system coordinates for one or more locations approved for the device, or an indication of a class of service for the device. In at least some example embodiments, at least one of a portion of the approved region information is preconfigured on the device or a portion of the approved region information is received by the device from a service provider device associated with the fixed wireless access service. In at least some example embodiments, at least a portion of the approved region information is received at the device without a corresponding firmware update for the device. In at least some example embodiments, the captive portal is configured to intercept and redirect web-based traffic and block other internet traffic. In at least some example embodiments, the service activation process is configured to initiate presentation of a notification that the fixed wireless access service is suspended based on a determination that the device has moved outside of the approved region for the device for the fixed wireless access service. In at least some example embodiments, the service activation process is configured to initiate presentation of an option for a customer of the fixed wireless access service to request use of the fixed wireless access service by the device at the current location of the device. In at least some example embodiments, the method includes sending, toward a network configured to provide the fixed wireless access service, a query to determine whether the network has sufficient capacity to support operation of the device at the current location of the device and initiating, based on a response indicative that the network has sufficient capacity to support operation of the device at the current location of the device, presentation of the option for the customer of the fixed wireless access service to request use of the fixed wireless access service by the device at the current location of the device. In at least some example embodiments, the option for the customer of the fixed wireless access service to request use of the fixed wireless access service by the device at the current location of the device includes an option for the customer of the fixed wireless access service to request a change of the approved region for the device for the fixed wireless access service to include the current location of the device. In at least some example embodiments, the method includes receiving, from a service provider of the fixed wireless access service, a confirmation that the approved region for the device for the fixed wireless access service has been changed to include the current location of the device and deactivating, based on the confirmation that the approved region for the device for the fixed wireless access service has been changed to include the current location of the device, the captive portal. In at least some example embodiments, the option for the customer of the fixed wireless access service to request use of the fixed wireless access service by the device at the current location of the device includes an option for the customer of the fixed wireless access service to purchase a roaming plan that permits use of the device at the current location of the device. In at least some example embodiments, the method includes receiving, from a service provider of the fixed wireless access service, a confirmation that the customer of the fixed wireless access service has purchased the roaming plan that permits use of the device at the current location of the device and deactivating, based on the confirmation that the customer of the fixed wireless access service has purchased the roaming plan that permits use of the device at the current location of the device, the captive portal. In at least some example embodiments, the method includes reactivating, based on a determination that the device is still located outside of the approved region for the device for the fixed wireless access service at the expiration of the roaming plan, the captive portal. In at least some example embodiments, the device includes a containerized application configured to detect the event and perform the activation of the captive portal and the initiation of the service access process. In at least some example embodiments, the device includes a set of firmware configured to cause the device to perform a set of functions, wherein the containerized application is maintained separate from the set of firmware. In at least some example embodiments, the fixed wireless access service is supported by a cellular network.

In at least some example embodiments, an apparatus includes means for detecting, by a device configured to communicate based on a fixed wireless access service, an event, means for performing, by the device in response to the event, a determination as to whether a current location of the device is within an approved region for the device for the fixed wireless access service, and means for performing, by the device based on a determination that the current location of the device is outside of the approved region for the device for the fixed wireless access service, activation of a captive portal configured to control communications of the device using the fixed wireless access service and initiation of a service access process configured to support use of the fixed wireless access service by the device outside of the approved region for the device for the fixed wireless access service. In at least some example embodiments, the event is a reboot of the device, a reset of the device, or a mobility event related to mobility of the device. In at least some example embodiments, the event is an association of the device with a new base station, an association of the device with a new cell of a base station, or a physical movement of the device to a new geographic location. In at least some example embodiments, the determination as to whether the current location of the device is within the approved region for the device for the fixed wireless access service is based on approved region information configured to describe the approved region for the device for the fixed wireless access service. In at least some example embodiments, the approved region information includes at least one of an indication of one or more base stations approved for the device, an indication of one or more cells approved for the device, one or more global positioning system coordinates for one or more locations approved for the device, or an indication of a class of service for the device. In at least some example embodiments, at least one of a portion of the approved region information is preconfigured on the device or a portion of the approved region information is received by the device from a service provider device associated with the fixed wireless access service. In at least some example embodiments, at least a portion of the approved region information is received at the device without a corresponding firmware update for the device. In at least some example embodiments, the captive portal is configured to intercept and redirect web-based traffic and block other internet traffic. In at least some example embodiments, the service activation process is configured to initiate presentation of a notification that the fixed wireless access service is suspended based on a determination that the device has moved outside of the approved region for the device for the fixed wireless access service. In at least some example embodiments, the service activation process is configured to initiate presentation of an option for a customer of the fixed wireless access service to request use of the fixed wireless access service by the device at the current location of the device. In at least some example embodiments, the apparatus includes means for sending, toward a network configured to provide the fixed wireless access service, a query to determine whether the network has sufficient capacity to support operation of the device at the current location of the device and means for initiating, based on a response indicative that the network has sufficient capacity to support operation of the device at the current location of the device, presentation of the option for the customer of the fixed wireless access service to request use of the fixed wireless access service by the device at the current location of the device. In at least some example embodiments, the option for the customer of the fixed wireless access service to request use of the fixed wireless access service by the device at the current location of the device includes an option for the customer of the fixed wireless access service to request a change of the approved region for the device for the fixed wireless access service to include the current location of the device. In at least some example embodiments, the apparatus includes means for receiving, from a service provider of the fixed wireless access service, a confirmation that the approved region for the device for the fixed wireless access service has been changed to include the current location of the device and means for deactivating, based on the confirmation that the approved region for the device for the fixed wireless access service has been changed to include the current location of the device, the captive portal. In at least some example embodiments, the option for the customer of the fixed wireless access service to request use of the fixed wireless access service by the device at the current location of the device includes an option for the customer of the fixed wireless access service to purchase a roaming plan that permits use of the device at the current location of the device. In at least some example embodiments, the apparatus includes means for receiving, from a service provider of the fixed wireless access service, a confirmation that the customer of the fixed wireless access service has purchased the roaming plan that permits use of the device at the current location of the device and means for deactivating, based on the confirmation that the customer of the fixed wireless access service has purchased the roaming plan that permits use of the device at the current location of the device, the captive portal. In at least some example embodiments, the apparatus includes means for reactivating, based on a determination that the device is still located outside of the approved region for the device for the fixed wireless access service at the expiration of the roaming plan, the captive portal. In at least some example embodiments, the apparatus includes means for providing a containerized application configured to detect the event and perform the activation of the captive portal and the initiation of the service access process. In at least some example embodiments, the apparatus includes means for providing a set of firmware configured to cause the device to perform a set of functions, wherein the containerized application is maintained separate from the set of firmware. In at least some example embodiments, the fixed wireless access service is supported by a cellular network.

### BRIEF DESCRIPTION OF THE DRAWINGS

The teachings herein can be readily understood by considering the following detailed description in conjunction with the accompanying drawings, in which:
FIG. 1 depicts an example embodiment of a communication system configured to support fixed wireless access mobility;
FIG. 2 depicts an example embodiment of a communication system configured to support fixed wireless access mobility;
FIG. 3 depicts an example embodiment of a method for use by a customer premises equipment device to support fixed wireless access mobility;
FIG. 4 depicts an example embodiment of a method for use by a customer premises equipment device to support fixed wireless access mobility; and
FIG. 5 depicts an example embodiment of a computer suitable for use in performing various functions presented herein.

To facilitate understanding, identical reference numerals have been used herein, wherever possible, in order to designate identical elements that are common among the various figures.

### DETAILED DESCRIPTION

Various example embodiments of a fixed wireless access (FWA) mobility capability are presented herein. The FWA mobility capability may be based on configuration of a customer premises equipment (CPE) device of an FWA service to support enforcement of mobility of the CPE device with respect to the FWA service. The CPE device may be configured to support enforcement of mobility of the CPE device with respect to the FWA service by controlling operation of the CPE device based on a location of CPE device with respect to an approved operating region of the CPE device for the FWA service. The CPE device may be configured to control operation of the CPE device based on a location of CPE device with respect to an approved operating region of the CPE device for the FWA service by checking the location of the CPE device with respect to the approved operating region of the CPE device for the FWA service in response to an event (e.g., a mobility event, a reboot event, a restart event, or the like) and, based on a determination that the CPE device is located outside of the approved operating region of the CPE device for the FWA service, activating a captive portal on the CPE device (e.g., a captive portal configured to block operation of certain functions when the CPE device is located outside of the approved operating region of the CPE device for the FWA service, until a customer of the FWA service subscribes to a roaming plan that permits temporary operation of the CPE device at the detected location of the CPE device or requests a permanent change of the approved operating region of the CPE device for the FWA service to include the detected location of the CPE device). The CPE device may be configured to control operation of the CPE device based on a location of CPE device with respect to an approved operating region of the CPE device for the FWA service based on use of a containerized application that is independent of firmware of the CPE device, thereby enabling firmware updates to the CPE device without jeopardizing the FWA mobility enforcement functions of the CPE device. It will be appreciated that these and various other example embodiments of the FWA mobility capability may be further understood within the context of various figures presented herein, which are discussed further below.

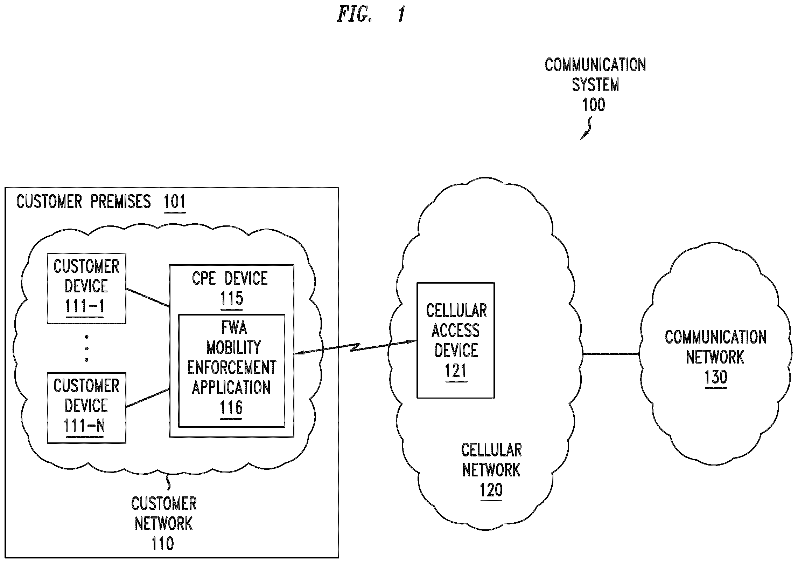

FIG. 1 depicts an example embodiment of a communication system configured to support fixed wireless access mobility.

The communication system 100 includes a customer network 110 located at a customer premises 101, a cellular network 120, and a communication network 130. The customer network 110 includes a set of customer devices 111-1 to 111-N (collectively, customer devices 111) and a customer premises equipment (CPE) device 115. The cellular network 120 includes a cellular access device 121 and may include various other communication elements which may be located within access and core portions of the cellular network 120 (e.g., access device controllers, serving gateways, packet gateways, mobility management entities, policy functions, charging functions, rules functions, control plane interfaces, user plane interfaces, or the like) which have been omitted for purposes of clarity. The communication network 130 may represent various types of communication networks which may be accessible via the cellular network 120 and may include various types of communication elements (which have been omitted for purposes of clarity) depending on the communication network type. It will be appreciated that the communication system 100 may include various other customer premises, CPE devices, networks, network devices, communication elements, or the like, as well as various combinations thereof.

The customer network 110, as indicated above, is located at the customer premises 101 and includes the customer devices 111 and the CPE device 115. The customer premises 101 may be any suitable customer location that includes devices which may communicate via the cellular network 120 and the communication network 130. For example, the customer premises 101 may be a residential location for a residential customer, a business location for a business customer, or the like. The customer network 110 may be a local area network (LAN) or other suitable type of network for the customer devices 111. The customer devices 111 are communicatively connected to the CPE device 115 at the customer premises 101 and may include various types of devices which may be located on the customer network 110 at the customer premises 101. For example, the customer devices 111 may include computers, tablets, smartphones, smart televisions, gaming systems, smart appliances, Internet-of-Things (IoT) devices, servers, or the like, as well as various combinations thereof. The CPE device 115, as discussed further below, is configured to operate as a gateway to the cellular network 120 for the customer devices 111 at the customer premises 101. For example, the CPE device 115 may be a gateway, an access control device, or like. It will be appreciated that the customer network 110 may include various other devices.

The cellular network 120 facilitates communications between the customer network 110 and the communication network 130. The cellular network 120 supports access by the CPE device 115 to the cellular network 120 based on a fixed wireless access (FWA) service. The FWA service uses radio spectrum of the cellular network 120 for wireless broadband connectivity between the CPE device 115 of the customer network 110 at the customer premises 101 and the cellular access device 121 in the cellular network 120, thereby enabling the CPE device 115 to support communications of the customer devices 111 via the cellular network 120 based on the FWA service. The FWA service is associated with a fixed location for the customer (e.g., a region including the customer premises 101 and potentially extending a certain distance around the customer premises 101), which is the approved region for the FWA service and, thus, also for the CPE device 115 which utilizes the FWA service for access to the cellular network 120. The FWA service may be a service offered by a network provider of the cellular network 120.

The cellular network 120 may include any type of cellular network which may support FWA service for the customer of the customer premises 101. For example, the cellular network 120 may include a Fourth Generation (4G) network configured to use 4G radio spectrum for the FWA service, a Fifth Generation (5G) network configured to use 5G radio spectrum for the FWA service, a Sixth Generation (6G) network configured to use 6G radio spectrum for the FWA service, or the like, as well as various combinations thereof. The cellular access device 121 may be any type of cellular access device configured to support FWA access by the CPE device 115 to the cellular network 120, which may vary for different types of cellular networks 120. For example, the cellular access device 121 may be a 4G base station, a 5G base station, a 6G base station, or the like. It will be appreciated that the cellular network 120 may include various other devices, elements, functions, or the like, as well as various combinations thereof. It will be appreciated that, although primarily presented herein with respect to example embodiments in which the FWA service is provided by a cellular network, in at least some example embodiments the FWA service may be provided by a different type of communication network.

The communication network 130 may include any network or combination of networks with which the customer devices 111 of the customer network 110 may communicate via the cellular network 120. For example, the communication network 130 may represent the Internet, one or more public communication networks, one or more private communication networks, one or more enterprise networks, one or more data center networks, one or more cloud networks, or the like, as well as various combinations thereof. It will be appreciated that the customer devices 111 may communicate with devices located within the communication network 130 (e.g., content servers, application servers, or the like, as well as various combinations thereof) and/or devices accessible via the communication network 130 (e.g., end devices such as end user devices, autonomous end devices, or the like, as well as various combinations thereof). It will be appreciated that the communication network 130 may be considered to include various other types of communication networks with which the customer devices 111 of the customer network 110 may communicate via the cellular network 120.

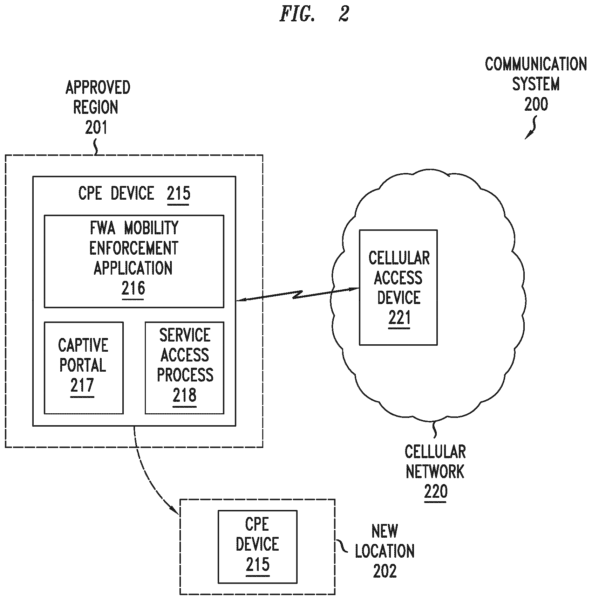

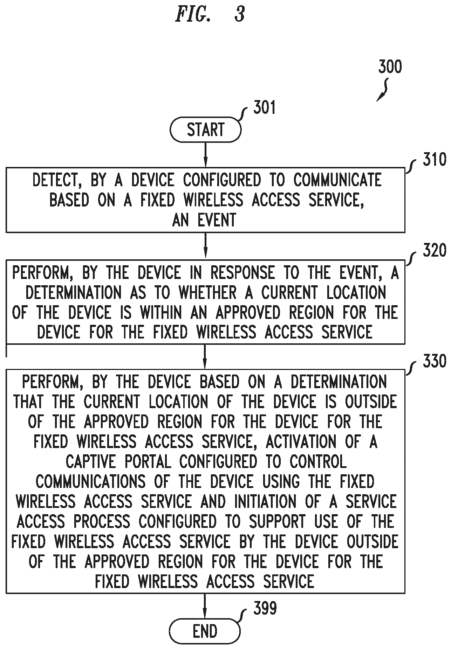

The communication system 100 is configured to support enforcement of FWA mobility for the CPE device 115 relative to the FWA service supported by the cellular network 120 for the CPE device 115. More specifically, the CPE device 115 is configured to enforce FWA mobility for the CPE device 115 relative to the FWA service supported by the cellular network 120 for the CPE device 115. The CPE device 115 includes an FWA mobility application 116 configured to enforce FWA mobility for the CPE device 115 relative to the FWA service supported by the cellular network 120 for the CPE device 115. The FWA mobility enforcement application 116 may be configured to support various functions for enabling the CPE device 115 to enforce FWA mobility for the CPE device 115 (e.g., location determination functions, captive portal capabilities for controlling use of the FWA service by the CPE device 115, or the like, as well as various combinations thereof). The FWA mobility enforcement application 116 may be implemented on the CPE device 115 as a containerized application, thereby ensuring that firmware upgrades on the CPE device 115 will not impact the ability of the CPE device 115 to support enforcement of FWA mobility for the CPE device 115. It will be appreciated that the operation of the FWA mobility enforcement application 116 and the CPE device 115 in supporting enforcement of FWA mobility for the CPE device 115 may be further understood by way of reference to the system presented with respect to FIG. 2 and the method presented with respect to FIG. 3.

It will be appreciated that the communication system 100 may include various other customer premises, CPE devices, networks, network devices, communication elements, or the like, as well as various combinations thereof.

FIG. 2 depicts an example embodiment of a communication system configured to support fixed wireless access mobility.

As illustrated in FIG. 2, communication system 200 includes a CPE device 215 of a customer and a cellular network 220 of a cellular service provider. The cellular network 220 includes a cellular access device 221 providing cellular access to the cellular network 220. It will be appreciated that the communication system 200 of FIG. 2 may represent a portion of the communication system 100 of FIG. 1 (e.g., the CPE device 215 of FIG. 2 may correspond to CPE device 115 of FIG. 1, the cellular network 220 of FIG. 2 may correspond to the cellular network 120 of FIG. 1, the cellular access device 221 of FIG. 2 may correspond to the cellular access device 121 of FIG. 1, and so forth), with other elements being omitted from FIG. 2 for purposes of clarity.

The CPE device 215 is associated with an FWA service. The FWA service may be provided by an FWA service provider, which may be the provider of the cellular network 220, a third-party provider which cooperates with the provider of the cellular network 220, or the like. The FWA service may be accessed by the CPE device 215 based on subscription by a customer of the CPE device 215 to the FWA service of the FWA service provider. The FWA service supports broadband wireless access by the CPE device 215 to the cellular network 220 via the cellular access device 221, thereby enabling the CPE device 215 to support communications of one or more customer devices of the customer which are supported by the CPE device 215 (omitted for purposes of clarity).

The CPE device 215 has associated therewith an approved region 201 for the CPE device 215 for the FWA service. The approved region 201 for the CPE device 215 for the FWA service may be defined by the FWA service provider. The CPE device 215, when located within the approved region 201, is authorized to utilize the FWA service to communicate via the cellular network 220 based on access to the cellular access device 221. The CPE device 215, when located outside of the approved region 201, at least initially, is not authorized to utilize the FWA service to communicate via the cellular network 220 based on access to the cellular access device 221. It is noted that the potential for mobility of the CPE device 215 outside of the approved region 201 for the CPE device 215 for the FWA service is illustrated in FIG. 2 as the movement of the CPE device 215 from the approved region 201 for the CPE device 215 for the FWA service to a new location 202 which is outside of the approved region 201 for the CPE device 215 for the FWA service which, as discussed further below may be detected by the CPE 215 so that the CPE device 215 may support enforcement of mobility of the CPE device 215 outside of the approved region 201 for the CPE device 215 for the FWA service.

The approved region 201 for the CPE device 215 for the FWA service may be defined by the FWA service provider in various ways and, thus, the approved region 201 for the CPE device 215 for the FWA service may have various shapes and/or sizes, may be monitored in various ways for determining compliance of the CPE device 215 with respect to the approved region 201 for the CPE device 215 for the FWA service (e.g., based on geographic location, based on points of access to the cellular access network 220, or the like, as well as various combinations thereof), or the like, as well as various combinations thereof. It is noted that at least some of the various ways in which the approved region 201 for the CPE device 215 for the FWA service may be defined for the CPE device 215 and monitored for the CPE device 215 are discussed further below.

The approved region 201 for the CPE device 215 for the FWA service may be defined based on a particular base station or set of base stations (e.g., based on the cellular access device 221 of the cellular network 220). For example, as long as the CPE device 215 is connected to or communicating via the base station or a base station in the set of base stations then the CPE device 215 is considered to be located within the approved region 201 for the CPE device 215. For example, as long as a received signal strength from the base station or a base station in the set of base stations satisfies a threshold, then the CPE device 215 is considered to be located within the approved region 201 for the CPE device 215. In this case, the approved region 201 for the CPE device 215 for the FWA service may include a geographic area around the base station or the set of base stations that includes the customer premises where the CPE device 215 is expected to be located but which may also allow the CPE device 215 to move some distance and still be considered to be located within the approved region 201 for the CPE device 215 for the FWA service.

The approved region 201 for the CPE device 215 for the FWA service may be defined based on a particular cell or set of cells of a particular base station or set of base stations (e.g., based on the cellular access device 221 of the cellular network 220). For example, as long as the CPE device 215 is connected to or communicating via the particular cell or set of cells of the base station or set of base stations then the CPE device 215 is considered to be located within the approved region 201 for the CPE device 215. For example, as long as a received signal strength from the cell or set of cells of the base station or set of base stations satisfies a threshold, then the CPE device 215 is considered to be located within the approved region 201 for the CPE device 215. In this case, the approved region 201 for the CPE device 215 for the FWA service may include a geographic coverage area of the cell or set of cells that includes the customer premises where the CPE device 215 is expected to be located but which may also allow the CPE device 215 to move some distance and still be considered to be located within the approved region 201 for the CPE device 215 for the FWA service.

The approved region 201 for the CPE device 215 for the FWA service may be defined as a geographic area. The geographic area may be defined based on global positioning system (GPS) coordinates. The geographic area may be defined to include the location of the customer premises where the CPE device 215 is deployed. The geographic area may be defined to include the location of the customer premises where the CPE device 215 is deployed as well as an area that extends some distance around the customer premises where the CPE device 215 is deployed (it will be appreciated that this additional area around the customer premises where the CPE device 215 is deployed may be defined in various ways depending on the level of mobility that the FWA service provider is willing to provide to the customer). The geographic area may take various shapes, such as a quadrilateral (e.g., defined based on four GPS coordinates), a circle (e.g. defined based on a GPS point for the customer premises and an associated radius for the circle around the customer premises), or the like. It will be appreciated that geographic area for the approved region 201 may be defined in various other ways.

The approved region 201 for the CPE device 215 for the FWA service may be defined based on a combination of two or more of such bases for defining the approved region 201 for the CPE device 215 for the FWA service. For example, the approved region 201 for the CPE device 215 for the FWA service may be defined as a particular geographic region that is being served by a particular base station or set of base stations (e.g., located within a geographic area defined based on GPS coordinates as long as the CPE device 215 is communicating via the base station or a base station within an approved set of base stations). For example, the approved region 201 for the CPE device 215 for the FWA service may be defined as a particular geographic region that is being served by a particular cell or set of cells of one or more base stations (e.g., located within a geographic area defined based on GPS coordinates as long as the CPE device 215 is communicating via the cell or a cell within an approved set of cells). It will be appreciated that the approved region 201 for the CPE device 215 for the FWA service may be defined based on various other combinations of bases for defining the approved region 201 for the CPE device 215 for the FWA service.

The CPE device 215 maintains approved region description information which defines the approved region 201 for the CPE device 215 for the FWA service. The approved region description information which defines the approved region 201 for the CPE device 215 for the FWA service may vary depending on the manner in which the approved region 201 for the CPE device 215 for the FWA service is defined by the FWA service provider. For example, the approved region description information for the approved region 201 may include one or more of an indication of one or more base stations approved for the CPE device 215 (e.g. one or more base station identifiers), an indication of one or more cells approved for the CPE device 215 (e.g., one or more cell identifiers), an indication of a geographic area approved for the CPE device 215 (e.g., based on one or more GPS coordinates for one or more areas or locations approved for the CPE device 215), an indication of a class of service for the CPE device 215, or the like, as well as various combinations thereof. It will be appreciated that the approved region description information which defines the approved region 201 for the CPE device 215 for the FWA service may include various other types of information which may be used to define the approved region 201 for the CPE device 215 for the FWA service.

The CPE device 215, as indicated above, maintains the approved region description information which defines the approved region 201 for the CPE device 215 for the FWA service. The approved region description information which defines the approved region 201 for the CPE device 215 for the FWA service may be provisioned onto the CPE device 215 in various ways. For example, the approved region description information which defines the approved region 201 for the CPE device 215 for the FWA service may be pre-stored on the CPE device 215 before the CPE device 115 is deployed to the customer premises, may be downloaded to the CPE device 215 during configuration of the CPE device 215 to operate based on the FWA service, or the like, as well as various combinations thereof. It will be appreciated that the approved region description information which defines the approved region 201 for the CPE device 215 for the FWA service may be provisioned onto the CPE device 215 in various other ways.

The CPE device 215 is configured to enforce FWA mobility for the CPE device 215 relative to the approved region 201 for the CPE device 215 for the FWA service. The CPE device 215 is configured to enforce FWA mobility for the CPE device 215 based on an FWA mobility enforcement application 216, a captive portal 217, and a service access process 218. The FWA mobility enforcement application 216 is configured to monitor a location of the CPE device 215 relative to the approved region 201 for the CPE device 215 for the FWA service and, based on a determination that the CPE device 215 is located outside of the approved region 201 for the CPE device 215 for the FWA service, activate the captive portal 217 and initiate use of the service access process 218. The captive portal 217 is configured to control communications of the CPE device 215 when the CPE device 215 is determined to be outside of the approved region 201 for the CPE device 215 for the FWA service. The service access process 218 is configured to provide a customer of the FWA service with an opportunity to ensure continuity of use of the FWA service by the CPE device 215 when the CPE device 215 is determined to be outside of the approved region 201 for the CPE device 215 for the FWA service.

The FWA mobility enforcement application 216 may be configured to determine whether the CPE device 215 is located within the approved region 201 for the CPE device 215 for the FWA service in order to determine whether or not to activate the captive portal 217 on the CPE device 215 and whether or not to initiate use of the service access process 218 on the CPE device 215. The FWA mobility enforcement application 216, based on a determination that the CPE device 215 is located within the approved region 201 for the CPE device 215 for the FWA service, does not need to activate the captive portal 217 or initiate the service access process 218, and the CPE device 215 may continue to operate using the FWA service. The FWA mobility enforcement application 216, based on a determination that the CPE device 215 is located outside of the approved region 201 for the CPE device 215 for the FWA service, activates the captive portal 217 for the CPE device 215 in order to control communication by the CPE device 215 using the FWA service when the CPE device 215 is determined to be outside of the approved region 201 for the CPE device 215 for the FWA service and initiates use of the service access process 218 to provide a customer of the FWA service with an opportunity to ensure continuity of use of the FWA service by the CPE device 215 when the CPE device 215 is determined to be outside of the approved region 201 for the CPE device 215 for the FWA service.

The FWA mobility enforcement application 216 may be configured to determine whether the CPE device 215 is located within the approved region 201 for the CPE device 215 for the FWA service by determining a current location of the CPE device 215 and comparing the current location of the CPE device 215 to the approved region description information which defines the approved region 201 for the CPE device 215 for the FWA service to determine whether the whether the CPE device 215 is located within the approved region 201 for the CPE device 215 for the FWA service. The current location of the CPE device 215 may be determined in a manner that may depend on the manner in which the approved region 201 for the CPE device 215 for the FWA service is defined in terms of the approved region description information used to define the approved region 201 for the CPE device 215 for the FWA service (e.g., based on GPS coordinates for the current location of the CPE device 215 where the approved region 201 for the CPE device 215 is defined as a geographic area, based on an indication of a base station with which the CPE device 215 is currently associated where the approved region 201 for the CPE device 215 is defined based on an approved base station or set of base stations, based on an indication of a cell with which the CPE device 215 is currently associated where the approved region 201 for the CPE device 215 is defined based on an approved cell or set of cells, or the like, as well as various combinations thereof).

The FWA mobility enforcement application 216 may be configured to determine whether the CPE device 215 is located within the approved region 201 for the CPE device 215 for the FWA service periodically, in response to detection of an event associated with mobility of the CPE device 215 relative to the approved region 201 for the CPE device 215 for the FWA service, or the like, as well as various combinations thereof. The event that triggers that determination as to whether the CPE device 215 is located within the approved region 201 for the CPE device 215 for the FWA service may be a CPE device state event, such as a reboot of the CPE device 215 (e.g., a soft reboot or a hard reboot), a restart of the CPE device 215, or the like. The event that triggers that determination as to whether the CPE device 215 is located within the approved region 201 for the CPE device 215 for the FWA service may be a mobility event in which the location of the CPE 215 changes (e.g., a physical location of the CPE device 215 changes, a network location of the CPE device 215 changes in terms of a base station with which the CPE device 215 is associated, or the like, as well as various combinations thereof).

It will be appreciated that FWA mobility enforcement application 216 may be configured to determine whether the CPE device 215 is located within the approved region 201 for the CPE device 215 for the FWA service in response to various other types of triggers.

The FWA mobility enforcement application 216, based on a determination that the CPE device 215 is located outside of the approved region 201 for the CPE device 215 for the FWA service, activates the captive portal 217 for the CPE device 215 in order to control communication by the CPE device 215 using the FWA service when the CPE device 215 is determined to be outside of the approved region 201 for the CPE device 215 for the FWA service and initiates use of the service access process 218 to provide a customer of the FWA service with an opportunity to ensure continuity of use of the FWA service by the CPE device 215 when the CPE device 215 is determined to be outside of the approved region 201 for the CPE device 215 for the FWA service. It will be appreciated that the FWA mobility enforcement application 216 may perform or initiate various other types of functions or processes based on a determination that the CPE device 215 is located outside of the approved region 201 for the CPE device 215 for the FWA service.

The captive portal 217, once activated by the FWA mobility enforcement application 216 based on a determination that the CPE device 215 is located outside of the approved region 201 for the CPE device 215 for the FWA service, is configured to control communications by the CPE device 215 based on the FWA service. The captive portal 217 may be configured to operate as an intermediary, between the customer device of the customer that is attempting to communicate via the CPE device 215 and the cellular network 220, for controlling and managing user access to the cellular network 220 via the CPE device 215 (e.g., requiring a user communicating via the CPE device 215 to authenticate and agree to certain terms and conditions before gaining full access to the Internet via the CPE device 215 and the cellular network 220, such as by automatically directing the web browser of the device of the user to a login page or portal via which the user may be prompted to enter credentials, accept terms of service, make payments for access, or the like, as well as various combinations thereof). The captive portal 217 may be configured to intercept and redirect any web-based traffic on the CPE device 215 and block any other Internet traffic on the CPE device 215. The captive portal 217 may be configured to intercept and redirect any traffic which is related to use of the FWA mobility enforcement application 216 (e.g., traffic related to enabling the customer of the FWA service to continue to use the FWA service outside of the approved region 201 for the CPE device 215 for the FWA service, such as traffic related to enabling the customer to interact with the network to modify the approved region 201 for the CPE device 215 for the FWA service or to purchase a temporary roaming agreement to enable use of the FWA service outside of the approved region 201 for the CPE device 215 for the FWA service) and block any other Internet traffic on the CPE device 215 (to prevent use of the CPE device 215 by the customer until the customer takes some action to ensure continuity of the FWA service after the CPE device 215 is detected as being outside of the approved region 201 for the CPE device 215 for the FWA service). It will be appreciated that the captive portal 217 may be configured to support various other functions.

The service access process 218, once the captive portal 217 has been activated by the FWA mobility enforcement application 216 based on a determination that the CPE device 215 is located outside of the approved region 201 for the CPE device 215 for the FWA service, is configured to provide a customer of the FWA service with an opportunity to ensure continuity of use of the FWA service by the CPE device 215. The service access process 218 may initiate presentation of a notification to a customer of the FWA service. The notification may include an indication that the CPE device 215 has moved outside of the approved region 201 for the CPE device 215 for the FWA service (e.g., an informational notice to provide the customer with an indication as to why the CPE device 215 may not be supporting communications based on the FWA service) and an option for the customer to request use of the FWA service by the CPE device 215 outside of the approved region 201 for the CPE device 215 for the FWA service (e.g., to request use of the FWA service by the CPE device 215 at the current location at the current location of the CPE device 215 even though the CPE device 215 is located outside of the approved region 201 for the CPE device 215 for the FWA service, to request use of the FWA service by the CPE device 215 anywhere outside of approved region 201 for the CPE device 215 for the FWA service, or the like, as well as various combinations thereof).

The notification may be presented to the customer of the FWA service in various ways. For example, the notification may be presented to the customer of the FWA service via one or more of the customer devices currently associated with the CPE device 215 (e.g., currently connected to the CPE device 215, currently attempting to communicate via the CPE device 215 based on the FWA service, or the like, as well as various combinations thereof). For example, the notification may be presented to the customer of the FWA service via one or more user devices specified by the customer for such notifications (e.g., maintained as part of a customer profile of the customer for the FWA service for use in notifying the customer when the captive portal is activated on the CPE device 215 for the FWA service), which may include one or more customer devices currently associated with the CPE device 215, one or more devices of the customer which are not associated with the CPE device 215 (e.g., a smartphone of the customer irrespective of whether the smartphone is currently attempting, or ever attempts, to communicate via the CPE device 215 based on the FWA service), or the like, as well as various combinations thereof. It will be appreciated that the notification may be presented to the customer of the FWA service in various other ways.

The notification, with respect to the option for the customer of the FWA service to request use of the FWA service by the CPE device 215 outside of the approved region 201 for the CPE device 215 for the FWA service even though the CPE device 215 is located outside of the approved region 201 for the CPE device 215 for the FWA service, may include an option for the customer of the FWA service to request a change of the approved region 201 for the CPE device 215 for the FWA service to include the current location of the CPE device 215, an option for the customer of the FWA service to purchase a roaming plan that permits use of the CPE device 215 for the FWA service outside of the approved region 201 for the CPE device 215 for the FWA service (e.g., at the current location of the CPE device 215 or at any location outside of the approved region 201 for the CPE device 215 for the FWA service), or the like, as well as various combinations thereof. It will be appreciated that multiple such options may be presented to the customer of the FWA service in various ways. It will be appreciated that various other types of service continuity options may be offered to the customer of the FWA service in order to enable the customer of the FWA service to request use of the FWA service by the CPE device 215 at the current location of the CPE device 215.

The service access process 218, before including the option for the customer to request use of the FWA service by the CPE device 215 outside of the approved region 201 for the CPE device 215 for the FWA service, may perform one or more processes for verifying that use of the FWA service by the CPE device 215 at the current location of the CPE device 215 is permitted or possible. For example, the service access process 218 may verify that there is sufficient network capacity at the current location of the CPE device 215 to support use of the FWA service by the CPE device 215 at the current location of the CPE device 215 (e.g., based on messaging between the CPE device 215 and one or more systems of the cellular access network to ensure that are sufficient resources to support the FWA service for the CPE device 215 at the current location of the CPE device 215). It will be appreciated that the service access process 218 may perform one or more other processes for verifying that use of the FWA service by the CPE device 215 at the current location of the CPE device 215 is permitted or possible before the service access process 218 provides the customer with an option for continuity of the FWA service at the current location of the CPE device 215.

The service access process 218, after initiating presentation of the notification to the customer of the FWA service, waits for a response from the customer of the FWA service. The service access process 218 may wait for a response for a predetermined length of time, after which the presented option for the customer to continue to use the FWA service at the current location of the CPE device 215 may expire and the captive portal 217 may continue to prevent use of the FWA service by the CPE device 215 until some other action is taken by the customer of the FWA service (e.g., the CPE device 215 returns to the approved region 201 for the CPE device 215 for the FWA service, the customer contacts the FWA service provider to reactivate the FWA service, or the like, as well as various combinations thereof). The service access process 218, based receipt of a negative response by the customer of the FWA service to the notification (i.e., an indication that the customer of the FWA service does not want to use the FWA service outside of the approved region 201 for the CPE device 215 for the FWA service), may ensure that the captive portal 217 remains activated to prevent use of the FWA service by the CPE device 215 until some other action is taken by the customer of the FWA service. The service access process 218, based receipt of a positive response by the customer of the FWA service to the notification (i.e., an indication of a request by the customer of the FWA service to use the FWA service outside of the approved region 201 for the CPE device 215 for the FWA service, such as based on dynamic modification of the approved region 201 for the FWA service or purchase a roaming plan for use of the FWA service at the current location of the CPE device 215), may initiate additional processes for supporting use of the FWA service outside of the approved region 201 for the CPE device 215 for the FWA service.

The service access process 218, based on receipt of a request from the customer of the FWA service to use the FWA service outside of the approved region 201 for the CPE device 215 for the FWA service (e.g., based receipt of a positive response from the customer of the FWA service to the notification) and before deactivating the captive portal 217 in order to reactivate use of the FWA service by the CPE device 215 at the current location of the CPE device 215, may initiate additional processes for verifying that use of the FWA service by the CPE device 215, even though the CPE device 215 is located outside of the approved region 201 for the CPE device 215 for the FWA service, can be reactivated. For example, the service access process 218 may verify the request with the FWA service provider of the FWA service (e.g., based on messaging with one or more systems of the FWA service provider). It will be appreciated that the manner in which the request is verified with the FWA service provider of the FWA service may depend on the type of request initiated by the customer of the FWA service.

The service access process 218 may receive a request from the customer of the FWA service to use the FWA service outside of the approved region 201 for the CPE device 215 for the FWA service where the request is a request to modify the approved region 201 for the CPE device 215 for the FWA service to include the current location of the CPE device 215. This may be used, for example, to enable a dynamic transition of the customer to a new customer premises (e.g., where the customer moves to a new location and wants to continue using the FWA service for wireless access at the new location). The service access process 218, in response to the request, may verify with the FWA service provider of the FWA service that the approved region 201 for the CPE device 215 for the FWA service can be modified to include the current location of the CPE device 215. The service access process 218, based on a determination that the approved region 201 for the CPE device 215 for the FWA service can be modified to include the current location of the CPE device 215, may update the approved region description information for the approved region 210 to include the current location of the CPE device 215 (and, optionally, to remove one or more locations or areas which were previously part of the approved region 201 and which are no longer considered to be part of the approved region 201 for the CPE device 215 for the FWA service) and deactivate the captive portal 217 to enable the CPE device 215 to communicate via the cellular network 220 based on the FWA service.

The service access process 218 may receive a request from the customer of the FWA service to use the FWA service outside of the approved region 201 for the CPE device 215 for the FWA service where the request is a request to activate a roaming plan that permits temporary operation of the CPE device 215 outside of the approved region 201 for the CPE device 215 for the FWA service (e.g., at the current location of the CPE device 215 or anywhere outside of the approved region 201 for the CPE device 215 for the FWA service, which may depend on the particulars of the roaming plan offered by the FWA service provider and/or requested by the customer of the FWA service). This may be used, for example, to enable the customer to temporarily use the FWA service outside of the approved region 201 for the CPE device 215 for the FWA service without having to modify the approved region 201 for the CPE device 215 for the FWA service (e.g., where the customer has a temporary need to use the CPE device 215 for wireless access at some other location outside of the approved region 201). The service access process 218, in response to the request, may verify with the FWA service provider of the FWA service that the roaming plan can be activated for the customer of the FWA service (e.g., that the customer has paid for the roaming plan or at least authorized payment for the roaming plan). The service access process 218, based on a determination that the roaming plan can be activated for the customer of the FWA service, may maintain approved region information for the roaming plan (e.g., as part of the approved region description information for the approved region 201 and/or as separate approved region information maintained for the roaming plan) and deactivate the captive portal 217 to enable the CPE device 215 to communicate via the cellular network 220 based on the FWA service.

The service access process 218, while a roaming plan is activated for the customer of the FWA service, may continue to enforce mobility of the CPE device 215 with respect to the roaming plan. The service access process 218 may enforce the mobility of the CPE device 215 with respect to the roaming plan in a manner similar to enforcement of the mobility of the CPE device 215 with respect to the FWA service. For example, the service access process 218, while the roaming plan is activated for the customer of the FWA service, may monitor for events which trigger location verification actions (e.g., events such as reboots/restarts, mobility events such as where the CPE device 215 moves to a new base station or cell of a base station, or the like, as well as various combinations thereof), verify the location of the CPE device 215 with respect to the approved region of the CPE device 215 based on the roaming plan (e.g., the roaming plan may permit use of the FWA service only at or in the vicinity of the location of the CPE device 215 when the roaming plan was activated, may permit use of the FWA service anywhere outside of the approved region 201 for the CPE device 215 for the FWA service, or the like), reactivate the captive portal based on a determination that the customer has violated one or more terms of the roaming plan (e.g., based on a determination that the CPE device 215 has been moved outside of a region approved for the roaming plan), or the like, as well as various combinations thereof.

The service access process 218, while a roaming plan is activated for the customer of the FWA service, may manage expiration of the roaming plan. The service access process 218, prior to expiration of the roaming plan, may initiate presentation of an option for the customer of the FWA service to renew the roaming plan while also informing the customer of the FWA service that failure to renew the roaming plan or to return the CPE device 215 to the approved region 201 for the CPE device 215 for the FWA service will result in suspension of the FWA service. The service access process 218, based on a determination that the roaming plan has expired, may determination the current location of the CPE device 215 to determine whether the CPE device 215 has been returned to a location within the approved region 201 for the CPE device 215 for the FWA service. The service access process 218, based on a determination that the CPE device 215 is not within the approved region 201 for the CPE device 215 for the FWA service when the roaming plan expires, may reactivate the captive portal 217 to control communications by the CPE device 215 via the FWA service. The service access process 218, based on a determination that the CPE device 215 is not within the approved region 201 for the CPE device 215 for the FWA service when the roaming plan expires, may leave the captive portal 217 in the deactivated state in order to enable the CPE device 215 to communicate using the FWA service.

It will be appreciated that, although primarily presented herein with respect to specific functions of the CPE device 215 being performed by the FWA mobility enforcement application 216, the captive portal 217, and the service access process 218, respectively, various functions of the CPE device 215 may be provided in various other ways (e.g., various functions presented herein as being provided by the FWA mobility enforcement application 216 may be provided by the captive portal 217 and/or the service access process 218, various functions presented herein as being provided by the captive portal 217 may be provided by the FWA mobility enforcement application 216, various functions presented herein as being provided by the service access process 218 may be provided by the FWA mobility enforcement application 216, or the like, as well as various combinations thereof). It will be appreciated that various functions presented herein as being provided by the FWA mobility enforcement application 216, the captive portal 217, and the service access process 218 may be implemented on the CPE device 215 in various other ways.

It will be appreciated that the CPE device 215 may be configured to support various other functions for enforcing FWA mobility for the CPE device 215 relative to the approved region 201 for the CPE device 215 for the FWA service, may include various other elements configured to support various functions for enforcing FWA mobility for the CPE device 215 relative to the approved region 201 for the CPE device 215 for the FWA service, or the like, as well as various combinations thereof.

FIG. 3 depicts an example embodiment of a method for use by a customer premises equipment device to support fixed wireless access mobility. It will be appreciated that, although primarily presented herein as being performed serially, at least a portion of the functions of method 300 may be performed contemporaneously or in a different order than as presented in FIG. 3. At block 301, the method 300 begins. At block 310, detect, by a device configured to communicate based on a fixed wireless access service, an event. At block 320, perform, by the device in response to the event, a determination as to whether a current location of the device is within an approved region for the device for the fixed wireless access service. At block 330, perform, by the device based on a determination that the current location of the device is outside of the approved region for the device for the fixed wireless access service, activation of a captive portal configured to control communications of the device using the fixed wireless access service and initiation of a service access process configured to support use of the fixed wireless access service by the device outside of the approved region for the device for the fixed wireless access service. At block 399, the method 300 ends.

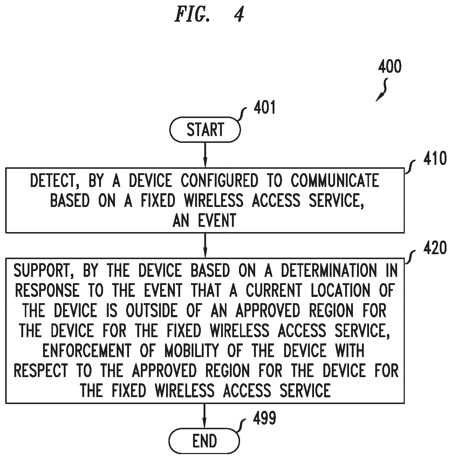

FIG. 4 depicts an example embodiment of a method for use by a customer premises equipment device to support fixed wireless access mobility. It will be appreciated that, although primarily presented herein as being performed serially, at least a portion of the functions of method 400 may be performed contemporaneously or in a different order than as presented in FIG. 4. At block 401, the method 400 begins. At block 410, detect, by a device configured to communicate based on a fixed wireless access service, an event. At block 420, support, by the device based on a determination in response to the event that a current location of the device is outside of an approved region for the device for the fixed wireless access service, enforcement of mobility of the device with respect to the approved region for the device for the fixed wireless access service. At block 499, the method 400 ends.

Various example embodiments of the FWA mobility capability may be configured to provide various advantages or potential advantages. For example, various example embodiments of the FWA mobility capability may be configured to enable the CPE device itself to support enforcement of its own mobility, thereby ensuring that the customer is provided an opportunity for continuity of service when the CPE device is moved outside of an approved region of operation for the FWA service used by the CPE device for network access (e.g., via an on-the-fly modification of the approved region of operation for the FWA service used by the CPE device for network access and/or an on-the-fly purchase of a roaming service that enables the CPE device to temporarily operate outside of the approved region of operation for the FWA service used by the CPE device). For example, various example embodiments of the FWA mobility capability may be configured to enable the CPE device itself to support enforcement of its own mobility based on a containerized application on the CPE device, thereby ensuring that enforcement of FWA mobility of the CPE device is not impacted by firmware updates to the CPE device. It will be appreciated that various example embodiments of the FWA mobility capability may be configured to provide various other advantages or potential advantages.

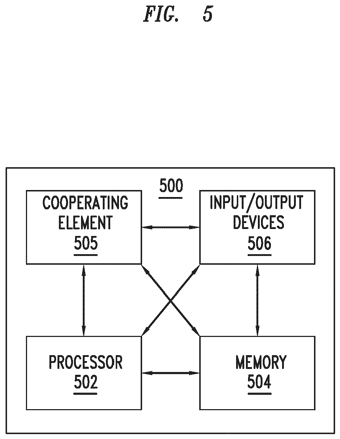

FIG. 5 depicts an example embodiment of a computer suitable for use in performing various functions presented herein.

The computer 500 includes a processor 502 (e.g., a central processing unit (CPU), a graphics processing unit (GPU), a processor, a processor core of a processor, a subset of processor cores of a processor, a set of processor cores of a processor, or the like) and a memory 504 (e.g., a random access memory (RAM), a read-only memory (ROM), or the like). In at least some example embodiments, the computer 400 may include at least one processor and at least one memory storing instructions that, when executed by the at least one processor, cause the computer to perform various functions presented herein.

The computer 500 also may include a cooperating element 505. The cooperating element 505 may be a hardware device. The cooperating element 505 may be a process that can be loaded into the memory 504 and executed by the processor 502 to implement various functions presented herein (in which case, for example, the cooperating element 505 (including associated data structures) can be stored on a non-transitory computer readable medium, such as a storage device or other suitable type of storage element (e.g., a magnetic drive, an optical drive, or the like)).

The computer 500 also may include one or more input/output devices 506. The input/output devices 506 may include one or more of a user input device (e.g., a keyboard, a keypad, a mouse, a microphone, a camera, or the like), a user output device (e.g., a display, a speaker, or the like), one or more network communication devices or elements (e.g., an input port, an output port, a receiver, a transmitter, a transceiver, or the like), one or more storage devices (e.g., a tape drive, a floppy drive, a hard disk drive, a compact disk drive, or the like), or the like, as well as various combinations thereof.

It will be appreciated that computer 500 may represent a general architecture and functionality suitable for implementing functional elements described herein, portions of functional elements described herein, or the like, as well as various combinations thereof. For example, computer 500 may provide a general architecture and functionality that is suitable for implementing one or more elements presented herein, such as a customer device or a portion thereof, a customer premises equipment device or a portion thereof, a cellular access device or a portion thereof, or the like.

It will be appreciated that at least some of the functions presented herein may be implemented in software (e.g., via implementation of software on one or more processors, for executing on a general purpose computer (e.g., via execution by one or more processors) so as to provide a special purpose computer, and the like) and/or may be implemented in hardware (e.g., using a general purpose computer, one or more application specific integrated circuits, and/or any other hardware equivalents).

It will be appreciated that at least some of the functions presented herein may be implemented within hardware, for example, as circuitry that cooperates with the processor to perform various functions. Portions of the functions/elements described herein may be implemented as a computer program product wherein computer instructions, when processed by a computer, adapt the operation of the computer such that the methods and/or techniques described herein are invoked or otherwise provided. Instructions for invoking the various methods may be stored in fixed or removable media (e.g., non-transitory computer readable media), transmitted via a data stream in a broadcast or other signal bearing medium, and/or stored within a memory within a computing device operating according to the instructions.

It will be appreciated that the term "non-transitory" as used herein is a limitation of the medium itself (i.e., tangible, not a signal) as opposed to a limitation of data storage persistency (e.g., RAM versus ROM).

It will be appreciated that, as used herein, "at least one of <a list of two or more elements>" and "at least one of the following: <a list of two or more elements>" and similar wording, where the list of two or more elements are joined by "and" or "or", mean at least any one of the elements, or at least any two or more of the elements, or at least all the elements.

It will be appreciated that, as used herein, the term "or" refers to a non-exclusive "or" unless otherwise indicated (e.g., use of "or else" or "or in the alternative").
It will be appreciated that, although various embodiments which incorporate the teachings presented herein have been shown and described in detail herein, those skilled in the art can readily devise many other varied embodiments that still incorporate these teachings.

## Claims

1. An apparatus comprising means for:
detecting, by a device configured to communicate based on a fixed wireless access service, an event;
performing, by the device in response to the event, a determination as to whether a current location of the device is within an approved region for the device for the fixed wireless access service; and
performing, by the device based on a determination that the current location of the device is outside of the approved region for the device for the fixed wireless access service, activation of a captive portal configured to control communications of the device using the fixed wireless access service and initiation of a service access process configured to support use of the fixed wireless access service by the device outside of the approved region for the device for the fixed wireless access service.

2. The apparatus according to claim 1, wherein the event is a reboot of the device, a reset of the device, or a mobility event related to mobility of the device.

3. The apparatus according to claim 1, wherein the event is an association of the device with a new base station, an association of the device with a new cell of a base station, or a physical movement of the device to a new geographic location.

4. The apparatus according to claim 1, wherein the determination as to whether the current location of the device is within the approved region for the device for the fixed wireless access service is based on approved region information configured to describe the approved region for the device for the fixed wireless access service.

5. The apparatus according to claim 1, wherein the captive portal is configured to intercept and redirect web-based traffic and block other internet traffic.

6. The apparatus according to claim 1, wherein the service activation process is configured to initiate presentation of a notification that the fixed wireless access service is suspended based on a determination that the device has moved outside of the approved region for the device for the fixed wireless access service.

7. The apparatus according to claim 1, wherein the service activation process is configured to initiate presentation of an option for a customer of the fixed wireless access service to request use of the fixed wireless access service by the device at the current location of the device.

8. The apparatus according to claim 7, further comprising means for:
sending, toward a network configured to provide the fixed wireless access service, a query to determine whether the network has sufficient capacity to support operation of the device at the current location of the device; and
initiating, based on a response indicative that the network has sufficient capacity to support operation of the device at the current location of the device, presentation of the option for the customer of the fixed wireless access service to request use of the fixed wireless access service by the device at the current location of the device.

9. The apparatus according to claim 7, wherein the option for the customer of the fixed wireless access service to request use of the fixed wireless access service by the device at the current location of the device includes an option for the customer of the fixed wireless access service to request a change of the approved region for the device for the fixed wireless access service to include the current location of the device.

10. The apparatus according to claim 9, further comprising means for:
receiving, from a service provider of the fixed wireless access service, a confirmation that the approved region for the device for the fixed wireless access service has been changed to include the current location of the device; and
deactivating, based on the confirmation that the approved region for the device for the fixed wireless access service has been changed to include the current location of the device, the captive portal.

11. The apparatus according to claim 7, wherein the option for the customer of the fixed wireless access service to request use of the fixed wireless access service by the device at the current location of the device includes an option for the customer of the fixed wireless access service to purchase a roaming plan that permits use of the device at the current location of the device.

12. The apparatus according to claim 11, further comprising means for:
receiving, from a service provider of the fixed wireless access service, a confirmation that the customer of the fixed wireless access service has purchased the roaming plan that permits use of the device at the current location of the device; and
deactivating, based on the confirmation that the customer of the fixed wireless access service has purchased the roaming plan that permits use of the device at the current location of the device, the captive portal.

13. The apparatus according to claim 12, further comprising means for:
reactivating, based on a determination that the device is still located outside of the approved region for the device for the fixed wireless access service at the expiration of the roaming plan, the captive portal.

14. A non-transitory computer readable medium storing computer program code which, when executed by an apparatus, causes the apparatus at least to perform:
detecting, by a device configured to communicate based on a fixed wireless access service, an event;
performing, by the device in response to the event, a determination as to whether a current location of the device is within an approved region for the device for the fixed wireless access service; and
performing, by the device based on a determination that the current location of the device is outside of the approved region for the device for the fixed wireless access service, activation of a captive portal configured to control communications of the device using the fixed wireless access service and initiation of a service access process configured to support use of the fixed wireless access service by the device outside of the approved region for the device for the fixed wireless access service.

15. A method, comprising:
detecting, by a device configured to communicate based on a fixed wireless access service, an event;
performing, by the device in response to the event, a determination as to whether a current location of the device is within an approved region for the device for the fixed wireless access service; and
performing, by the device based on a determination that the current location of the device is outside of the approved region for the device for the fixed wireless access service, activation of a captive portal configured to control communications of the device using the fixed wireless access service and initiation of a service access process configured to support use of the fixed wireless access service by the device outside of the approved region for the device for the fixed wireless access service.
